(19) **Europäisches Patentamt**
**European Patent Office**
**Office européen des brevets**

(11) **EP 4 296 756 B1**

(12) **EUROPEAN PATENT SPECIFICATION**

(45) Date of publication and mention
of the grant of the patent:
**18.02.2026 Bulletin 2026/08**

(21) Application number: **23174628.0**

(22) Date of filing: **22.05.2023**

(51) International Patent Classification (IPC):
*G02B 27/01* (2006.01)    *B60K 35/00* (2024.01)
*B60K 23/00* (2006.01)    *B60K 37/00* (2024.01)
*B60K 35/22* (2024.01)    *B60K 35/60* (2024.01)
*B60K 35/81* (2024.01)    *G02B 1/11* (2015.01)

(52) Cooperative Patent Classification (CPC):
**G02B 27/0101; B60K 35/22; B60K 35/60;**
**B60K 35/81;** B60K 2360/20; G02B 1/11;
G02B 2027/0118; G02B 2207/123

(54) **DISPLAY DEVICE**

ANZEIGEVORRICHTUNG

DISPOSITIF D'AFFICHAGE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **02.06.2022 CN 202210625528**

(43) Date of publication of application:
**27.12.2023 Bulletin 2023/52**

(73) Proprietor: **InnoLux Corporation**
**Chu-Nan, Miao-Li 350 (TW)**

(72) Inventors:
• **HUANG, Yu-Chia**
**350 Miao-Li County (TW)**

• **TSAI, Tsung-Han**
**350 Miao-Li County (TW)**

(74) Representative: **Straus, Alexander**
**2K Patentanwälte - München**
**Bajuwarenring 14**
**82041 Oberhaching (DE)**

(56) References cited:
**EP-A1- 3 730 333**    **EP-A2- 3 264 485**
**CN-A- 110 189 628**    **US-A1- 2019 384 057**
**US-A1- 2020 168 844**    **US-A1- 2021 193 971**
**US-A1- 2022 113 550**

## Description

Field of the Disclosure

The present disclosure relates to a display device, and more particularly relates to a display device with a light control structure.

Background of the Disclosure

Display devices can be used in cars as vehicle displays, wherein the vehicle displays can display any suitable image (such as related information about driving) according to the needs of users. However, the large-angle light emitted by the display device in the car may be reflected by the windshield to the driver's eyes, causing distraction of driving and increasing the risk of driving. Therefore, to reduce the light of the vehicle display reflected to the eyes of the driver through the glass is still an important issue in the related field.

A document D1 (EP3264485A2) discloses a display device for a vehicle with a window. However, it is not mentioned in the document D1 that a top surface of a substrate of the display device includes a first part overlapped with two adjacent light shielding structures and a second part overlapped with other two adjacent light shielding structures, wherein the first part is not parallel to the second part.

A document D2 (US2021193971A1) discloses a display device having a light control structure. However, it is not mentioned in the document D2 that a top surface of a substrate of the display device includes a first part overlapped with two adjacent light shielding structures and a second part overlapped with other two adjacent light shielding structures, wherein the first part is not parallel to the second part.

A document D5 (US2022113550A1) discloses a display device having a polarizer. However, it is not mentioned in the document D5 that the display device includes a light control structure and a top surface of a substrate of the display device includes a first part overlapped with two adjacent light shielding structures and a second part overlapped with other two adjacent light shielding structures, wherein the first part is not parallel to the second part.

A document D6 (US2019384057A1) discloses a display device for a vehicle with a window. However, it is not mentioned in the document D6 that a top surface of a substrate of the display device includes a first part overlapped with two adjacent light shielding structures and a second part overlapped with other two adjacent light shielding structures, wherein the first part is not parallel to the second part.

Summary of the Disclosure

The present disclosure aims at providing a display device having a light control structure, wherein the light control structure can reduce the light having a greater emitting angle. Therefore, when the display device is applied to vehicles as a vehicle display, the possibility that the light is reflected by windows of the vehicle to driver's eyes can be reduced, thereby reducing risk of driving.

This is achieved by a display device according to the claims. The dependent claims pertain to corresponding further developments and improvements.

As will be seen more clearly from the detailed description following below, a display device for a vehicle with a windshield is provided by the present disclosure, wherein the display device includes a substrate, a light control structure and a plurality of light emitting units. The light control structure is disposed on the substrate. The light control structure comprises a plurality of light shielding structures, wherein a first opening is between two adjacent ones of the plurality of light shielding structures, and a second opening is between other two adjacent ones of the plurality of light shielding structures. The plurality of light emitting units are disposed between the substrate and the light control structure and emit a light passing through the light control structure. In a cross-sectional view, a viewing region is defined on the windshield, a first reference point at the windshield is out of the viewing region and corresponding to an upper side of the viewing region, a distance dx1 exists between the first reference point and the display device in a horizontal direction, a distance dz1 exists between the first reference point and a center of the display device in a vertical direction, the light control structure has an effective emitting angle θ, and the effective emitting angle θ satisfy the following equation: $\theta \leq \arctan(dz1/dx1)$. The substrate has a top surface, a first part of the top surface is overlapped with the two adjacent ones of the plurality of light shielding structures, a second part of the top surface is overlapped with the other two adjacent ones of the plurality of light shielding structures, and the first part is not parallel to the second part.

These and other objectives of the present disclosure will no doubt become obvious to those of ordinary skill in the art after reading the following detailed description of the embodiment that is illustrated in the various figures and drawings.

Brief Description of the Drawings

In the following, the disclosure is further illustrated by way of example, taking reference to the accompanying drawings. Thereof:

FIG. 1 shows a schematic diagram of a display device in a vehicle according to a first embodiment of the present disclosure;
FIG. 2 shows another schematic diagram of the display device in the vehicle according to the first embodiment of the present disclosure;
FIG. 3 shows a schematic diagram of the light intensity of the display device according to the first embodiment of the present invention under different viewing angles;

FIG. 4 schematically illustrates a cross-sectional view of a light control structure according to the first embodiment of the present disclosure;

FIG. 5 schematically illustrates a cross-sectional view of a light control structure according to a variant embodiment of the first embodiment of the present disclosure;

FIG. 6 schematically illustrates a cross-sectional view of a display device according to a second embodiment of the present disclosure;

FIG. 7 schematically illustrates a cross-sectional view of a display device according to a third embodiment of the present disclosure;

FIG. 8 schematically illustrates a cross-sectional view of a display device according to a variant embodiment of the third embodiment of the present disclosure;

FIG. 9 schematically illustrates a partial enlarged top view of a display device according to a fourth embodiment of the present disclosure; and

FIG. 10 schematically illustrates a cross-sectional view of a display device according to a fifth embodiment of the present disclosure.

Detailed Description

The present disclosure may be understood by reference to the following detailed description, taken in conjunction with the drawings as described below. It is noted that, for purposes of illustrative clarity and being easily understood by the readers, various drawings of this disclosure show a portion of the electronic device, and certain elements in various drawings may not be drawn to scale. In addition, the number and dimension of each element shown in drawings are only illustrative and are not intended to limit the scope of the present disclosure.

Certain terms are used throughout the description and following claims to refer to particular elements. As one skilled in the art will understand, electronic equipment manufacturers may refer to an element by different names. This document does not intend to distinguish between elements that differ in name but not function.

In the following description and in the claims, the terms "include", "comprise" and "have" are used in an open-ended fashion, and thus should be interpreted to mean "include, but not limited to...".

It will be understood that when an element or layer is referred to as being "disposed on" or "connected to" another element or layer, it can be directly on or directly connected to the other element or layer, or intervening elements or layers may be presented (indirectly). In contrast, when an element is referred to as being "directly on" or "directly connected to" another element or layer, there are no intervening elements or layers presented. When an element or a layer is referred to as being "electrically connected" to another element or layer, it can be a direct electrical connection or an indirect electrical connection. The electrical connection or coupling described in the present disclosure may refer to a direct connection or an indirect connection. In the case of a direct connection, the ends of the elements on two circuits are directly connected or connected to each other by a conductor segment. In the case of an indirect connection, switches, diodes, capacitors, inductors, resistors, other suitable elements or combinations of the above elements may be included between the ends of the elements on two circuits, but not limited thereto.

Although terms such as first, second, third, etc., may be used to describe diverse constituent elements, such constituent elements are not limited by the terms. The terms are used only to discriminate a constituent element from other constituent elements in the specification. The claims may not use the same terms, but instead may use the terms first, second, third, etc. with respect to the order in which an element is claimed. Accordingly, in the following description, a first constituent element may be a second constituent element in a claim.

According to the present disclosure, the thickness, length and width may be measured through optical microscope, and the thickness or width may be measured through the cross-sectional view in the electron microscope, but not limited thereto.

In addition, any two values or directions used for comparison may have certain errors. In addition, the terms "equal to", "equal", "the same", "approximately" or "substantially" are generally interpreted as being within ± 20%, ± 10%, ± 5%, ± 3%, ± 2%, ± 1%, or ± 0.5% of the given value.

In addition, the terms "the given range is from a first value to a second value" or "the given range is located between a first value and a second value" represents that the given range includes the first value, the second value and other values there between.

If a first direction is said to be perpendicular to a second direction, the included angle between the first direction and the second direction may be located between 80 to 100 degrees. If a first direction is said to be parallel to a second direction, the included angle between the first direction and the second direction may be located between 0 to 10 degrees.

Unless it is additionally defined, all terms (including technical and scientific terms) used herein have the same meaning as commonly understood by those ordinary skilled in the art. It can be understood that these terms that are defined in commonly used dictionaries should be interpreted as having meanings consistent with the relevant art and the background or content of the present disclosure, and should not be interpreted in an idealized or overly formal manner, unless it is specifically defined in the embodiments of the present disclosure.

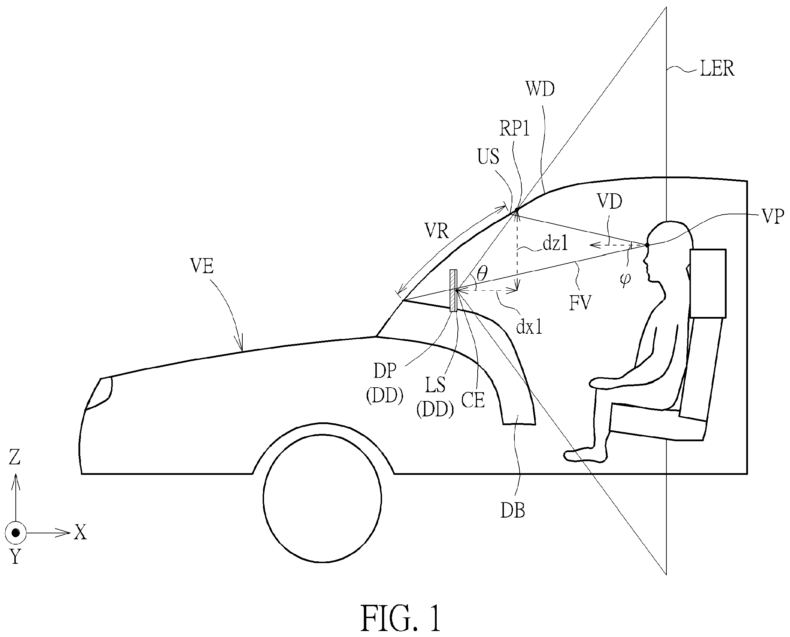

Referring to FIG. 1, FIG. 1 shows a schematic diagram of a display device in a vehicle according to a first embodiment of the present disclosure. As shown in FIG. 1, the display device DD of the present disclosure is used in a vehicle VE, wherein the vehicle VE may represent any transportation that can carry the user to move or the shell that can accommodate the user in the vehicle, and the vehicle VE has at least one window WD. The window WD includes the windshield. In other words, the display device DD may be disposed in the vehicle VE as a vehicle display. In order to facilitate the display device DD to be viewed by the user, the display device DD may be disposed at any suitable position in front of eyes of the driver and/or passengers. For example, the display device DD may be disposed in the dashboard, on the dashboard or at a side of the dashboard, but not limited thereto. In such condition, in the moving direction (that is, the direction $\pm X$, which will not be redundantly described in the following) of the vehicle VE, the display device DD may be located between the user (as shown in FIG. 1) and the window WD (such as the windshield), but not limited thereto. It should be noted that "the moving direction of the vehicle VE" described herein may include the forward direction (that is, the direction -X) and the backward direction (that is, the direction +X) of the vehicle VE, but not limited thereto. According to the present embodiment, the display device DD includes a display structure DP and a light control structure LS, wherein the light control structure LS may be disposed on the display structure DP. That is, the light control structure LS may be disposed on the side of the display structure DP facing the user, such that the light emitted by the display structure DP may pass through the light control structure LS before entering the user's eyes. The light control structure LS may include any suitable element capable of adjusting light path. Specifically, the light control structure LS can adjust the light path through its own structure or the characteristics of the materials included therein, but the present disclosure is not limited thereto. In some embodiments, the light control structure LS may be a structure adhered to the display structure DP. It should be noted that the display device DD shown in FIG. 1 is exemplary, and the present disclosure is not limited thereto. In some embodiments, the display device DD may be applied to any suitable electronic device or combined with any suitable electronic device. The electronic device may for example include sensing devices, backlight devices, antenna devices, tiled devices or other suitable electronic devices, but not limited thereto.

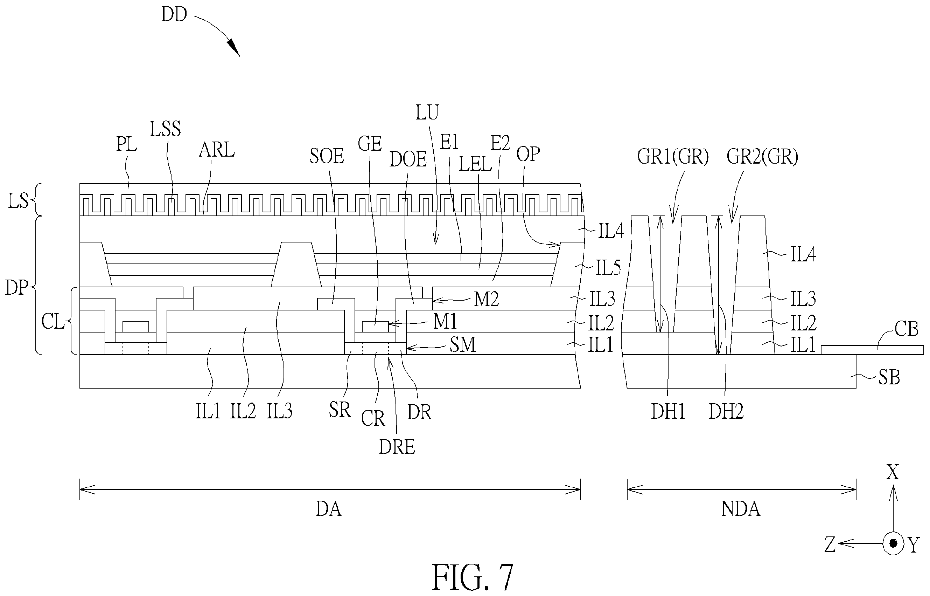

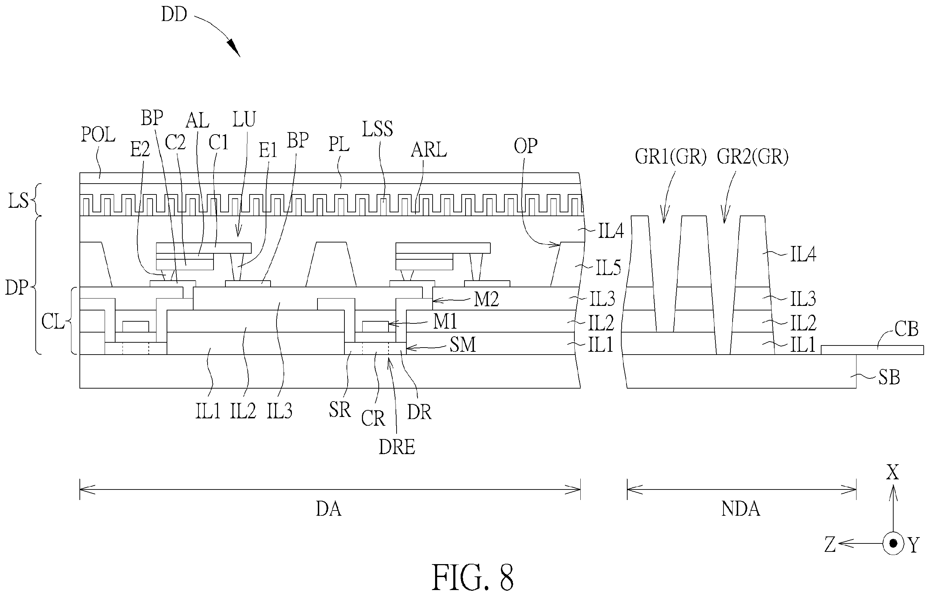

According to the present embodiment, the display structure DP of the display device DD may include a self-luminous display structure or a non-self-luminous display structure. When the display structure DP includes the non-self-luminous display structure, the display structure DP may include a backlight module, a light modulating module and/or other suitable elements. When the display structure DP includes the self-luminous display structure, the display structure DP may include light emitting units, driving elements for driving the light emitting units to emit light and/or other suitable elements. The light emitting units may for example include light emitting diodes, wherein the light emitting diodes may for example include organic light emitting diodes (OLED) or inorganic light emitting diodes, but not limited thereto. The inorganic light emitting diodes may for example include mini light emitting diodes (mini LED), micro light emitting diodes (micro LED) or quantum dot light emitting diodes (QLED), but not limited thereto. FIG. 7 and FIG. 8 respectively show the embodiments that the display structure DP includes the organic light emitting diodes and the inorganic light emitting diodes as the light emitting units LU. The detailed structure of the display structure DP of the present embodiment will be described by taking the display structures DP shown in FIG. 7 and FIG. 8 as examples in the following. However, the structure of the display structure DP of the present embodiment is not limited to what is shown in FIG. 7 and FIG. 8.

As shown in FIG. 7, the display device DD includes the display structure DP and the light control structure LS disposed on the display structure DP, wherein the display structure DP includes a substrate SB and a plurality of light emitting units LU disposed on the substrate SB. The light control structure LS is disposed on the substrate SB and the light emitting units LU, that is, the light emitting units LU is disposed between the substrate SB and the light control structure LS. Therefore, the light emitted by the light emitting units LU passes through the light control structure LS and then be emitted from the display device DD. In addition, the display structure DP may further include a circuit layer CL disposed between the substrate SB and the light emitting units LU, wherein the circuit layer CL may include any suitable electronic element. The electronic element may include active elements and/or passive elements, such as capacitors, resistors, inductors, diodes, transistors, sensors, and the like, but not limited thereto. For example, the circuit layer CL may include at least one driving element DRE, wherein the driving element DRE may include transistors (such as the thin film transistors (TFT), but not limited thereto). The driving element DRE may be electrically connected to the light emitting units LU, so as to control and/or drive the light emission of the light emitting units LU. The substrate SB may include a rigid substrate or a flexible substrate. The rigid substrate may for example include glass, quartz, sapphire, ceramic, other suitable materials or combinations of the above-mentioned materials, and the flexible substrate may for example include a polyimide (PI) substrate, a polycarbonate (PC) substrate, a polyethylene terephthalate (PET) substrate, other suitable substrates or combinations of the above-mentioned substrates, but not limited thereto. As shown in FIG. 7, the circuit layer CL may include a semiconductor SM, a metal layer M1 and a metal layer M2, wherein the semiconductor SM may form the channel region CR, the source region SR and the drain region DR of the driving element DRE (the transistor), and the metal layer M1 may form the gate electrode GE in the driving element DRE corresponding to the channel region CR. In addition, the metal layer M2 may form a source electrode SOE and a drain electrode DOE respectively electrically connected to the source region SR and the drain region DR. The material of the semiconductor SM may for example include silicon or metal oxides, such as low temperature polysilicon (LTPS) semiconductor, amorphous silicon (a-Si) semiconductor or indium gallium zinc oxide (IGZO) semiconductor, but not limited thereto. The metal layer M1 and the metal layer M2 may include any suitable conductive material, such as metals, but not limited thereto. In addition, the circuit layer CL may further include an insulating layer IL1 located between the semiconductor SM and the metal layer M1, an insulating layer IL2 located between the metal layer M1 and the metal layer M2, and an insulating layer IL3 covering the metal layer M2, wherein the insulating layer IL1, the insulating Layer IL2 and insulating layer IL3 may include any suitable insulating material. It should be noted that the number of the metal layers and the insulating layers in the circuit layer CL and disposition ways of the electronic elements shown in FIG. 7 are exemplary, and the present disclosure is not limited thereto. As shown in FIG. 7, the light emitting unit LU in the display structure DP may include the organic light emitting diode and include a first electrode E1, a second electrode E2 and a light emitting layer LEL disposed between the first electrode E1 and the second electrode E2. In addition, the display structure DP may further include an insulating layer IL5, wherein the insulating layer IL5 may be disposed on the circuit layer CL or disposed on the insulating layer IL3 of the circuit layer CL, but not limited thereto. At least one opening OP may be formed in the insulating layer IL5, and the light emitting units LU may be disposed in the openings OP of the insulating layer IL5. In other words, the insulating layer IL5 may for example be a pixel defining layer, but not limited thereto. The second electrode E2 of the light emitting unit LU may be electrically connected to the driving element DRE, such that the driving element DRE may control the light emission of the light emitting unit LU. For example, the second electrode E2 of the light emitting unit LU may be electrically connected to the drain electrode DOE of the driving element DRE. In addition, the display structure DP may further include an insulating layer IL4, wherein the insulating layer IL4 may encapsulate the layers and the electronic elements (such as the light emitting units LU, the driving elements DRE, and the like) between the insulating layer IL4 and the substrate SB to provide protection and provide a flat top surface on the circuit layer CL, which is good for disposition or formation of the light control structure LS, but not limited thereto. The materials of the insulating layer IL4 and the insulating layer IL5 may refer to the material of the insulating layer IL1 mentioned above, and will not be redundantly described.

As shown in FIG. 8, the light emitting unit may include the inorganic light emitting diode in some embodiments. Specifically, the light emitting unit LU may include a semiconductor C1, a semiconductor C2, an active layer AL located between the semiconductor C1 and the semiconductor C2, a first electrode E1 electrically connected to the semiconductor C1 and a second electrode E2 electrically connected to the semiconductor C2, but not limited thereto. The light emitting unit LU may be electrically connected to the bonding pads BP through the first electrode E1 and the second electrode E2, thereby being electrically connected to the driving element DRE and/or other suitable electronic elements through the bonding pads BP, such that the light emission of the light emitting unit LU may be controlled by the driving element DRE. The features of the elements and/or the layers such as the substrate SB, the circuit layer CL, and the like in the display structure DP shown in FIG. 8 may refer to the contents mentioned above, and will not be redundantly described.

It should be noted that the display structures DP of the display devices DD shown in FIG. 7 and FIG. 8 may be applied to the display devices DD in each of the embodiments of the present disclosure, and will not be redundantly described in the following. However, the display structures DP of the display devices DD in the embodiments are not limited to the display structures DP shown in FIG. 7 and FIG. 8.

Referring to FIG. 1 again, FIG. 1 shows the condition that the user is in the vehicle VE. According to the present embodiment, in the cross-sectional view of the vehicle VE (or the display device DD), a viewing region VR is included on the window WD, wherein the viewing region VR is defined through a field of view FV of the user at a view point VP. In other words, the viewing region VR is defined on the window WD through the field of view FV of the view point VP. It should be noted that "the cross-sectional view of the vehicle VE or the display device DD" described herein may be the cross-sectional view of the vehicle VE or the display device DD along a direction (such as the direction $\pm X$) parallel to the moving direction of the vehicle VE, but not limited thereto. Specifically, as shown in FIG. 1, the view point VP may be included in the vehicle VE, and the user may watch the display device DD at the view point VP and have a viewing direction VD. In such condition, the user may have a field of view FV at the view point VP, wherein the field of view FV may be defined as a user's visual region along a direction (such as the direction $\pm Z$) perpendicular to the moving direction of the vehicle VE, but not limited thereto. In other words, the field of view FV may be the region formed of the sight of the user in the direction $\pm Z$. In the present embodiment, the view point VP may for example be set at the position where the user's eyes are located, but not limited thereto. The field of view FV may have an angle $\varphi$ (or can be named as view angle), wherein the angle $\varphi$ of the field of view FV may be determined according to the sensitive range (or sensitive area) of the sight in the vertical direction of the user. Specifically, the sensitive range of the sight (or range of perception) in the vertical direction of human eyes may be within $\pm 5°$ of the viewing direction VD to $\pm 50°$ of the

viewing direction. Therefore, the angle φ of the field of view FV may range from 10 degrees to 100 degrees in the present embodiment, but not limited thereto. In some embodiments, the angle φ of the field of view FV may range from 20 degrees to 60 degrees. In some embodiments, the angle φ of the field of view FV may be 60 degrees. In the present embodiment, the value of the angle φ of the field of view FV may be determined according to the demands of the design of the product, thereby determining the range of the field of view FV. After the field of view FV is defined, the viewing region VR may be defined on the window WD, wherein the viewing region VR may be defined as the region formed of the projection of the field of view FV on the window WD. In other words, the viewing region VR may for example be a portion of the window WD that can be observed by the user in the field of view FV. Since the viewing region VR may be defined through the field of view FV, when the value of the angle φ of the field of view FV is changed, the range of the field of view FV may be changed accordingly, such that the defined viewing regions VR may be different.

After the viewing region VR is defined, the position of the first reference point RP1 at the window WD is defined through the viewing region VR. Specifically, as shown in FIG. 1, in the present embodiment, the window WD of the vehicle VE has at least one first reference point RP1, wherein the first reference point RP1 is out of the viewing region VR and substantially corresponding to an upper side US of the viewing region VR. It should be noted that although FIG. 1 shows only one first reference point RP1, the present embodiment is not limited thereto. In some embodiments, multiple first reference points RP1 may be defined at the window WD, and the first reference points RP1 may for example be arranged along the upper side US of the viewing region VR, but not limited thereto. "The upper side US of the viewing region VR" mentioned above may for example be defined as the side of the viewing region VR facing the roof of the vehicle VE, and the lower side of the viewing region VR may be defined as the side of the viewing region VR facing the bottom of the vehicle VE, but not limited thereto. In other words, after the viewing region VR is defined, a point at the window WD which is out of the viewing region VR and adjacent to the upper side US of the viewing region VR may be defined as the first reference point RP1, but not limited thereto. According to the present embodiment, after the first reference point RP1 is defined, a distance dx1 exists between the first reference point RP1 and the display device DD in a horizontal direction, and a distance dz1 exists between the first reference point RP1 and a center CE of the display device DD in a vertical direction. The "horizontal direction" described herein may be a direction (that is, the direction ±X) parallel to the moving direction of the vehicle VE, and the "vertical direction" described herein may be another direction (that is, the direction ±Z) perpendicular to the moving direction of the vehicle VE, but not limited thereto. The definitions of the "horizontal direction" and the "vertical direction" in the following may refer to the above-mentioned contents, and will not be redundantly described. In addition, in the present embodiment, the center CE of the display device DD may be defined as the middle point between the highest point and the lowest point in the cross-sectional view (such as the cross-sectional view parallel to the moving direction of the vehicle VE) of the display device DD, but not limited thereto. In some embodiments, the center CE may be the middle point between the highest point and the lowest point in the cross-sectional view of the display structure DP.

As mentioned above, the display device DD of the present embodiment includes the light control structure LS disposed on the display structure DP, wherein the light emitted by the display structure DP passes through the light control structure LS and be emitted from the display device DD. According to the present embodiment, the light control structure LS may be used to control the emitting angle of the light emitted from the display structure DP. Specifically, when the light emitted by the display structure DP passes through the light control structure LS, the light with a greater emitting angle may be reduced by being blocked, absorbed or eliminated in other ways by the light control structure LS, or the intensity of the light with a greater emitting angle may be reduced by the light control structure LS, but not limited thereto. In other words, after the light control structure LS is disposed, the light emitted by the display structure DP with a greater emitting angle may not be easily perceived by the user. In another aspect, among the light emitted by the display structure DP, the light with a lower emitting angle may not be affected by the light control structure LS, or the influence of the light control structure LS on the light with a lower emitting angle may be lower. In the present embodiment, the emitting angle of the light may for example be the included angle between the light and the horizontal direction (that is, the direction ±X), but not limited thereto.

According to the present embodiment, the light control structure LS has an effective emitting angle θ, wherein the effective emitting angle θ may for example be defined as the maximum emitting angle of the light at which the light can be efficiently emitted without being affected by the light control structure LS, but not limited thereto. Specifically, when the emitting angle of a light emitted by the display structure DP is greater than the effective emitting angle θ, the light may be blocked, absorbed or eliminated in other ways by the light control structure LS, or the intensity of the light may be reduced by the light control structure LS, such that the light is not easily perceived by the user. When the emitting angle of a light emitted by the display structure DP is lower than the effective emitting angle θ, the light may not be affected by the light control structure LS, or the light may be perceived by the user. As shown in FIG. 1, after the effective emitting angle θ is defined, the region formed of the light respectively at two sides of the horizontal direction and emitted with the effective emitting angle θ may be defined as the light emitting region LER of the display device DD, but not limited thereto. In other words, the user may perceive the light emitted by the display device DD in the light emitting region LER. In the present embodiment, the value of the effective emitting angle θ of the light control structure LS may be determined according to the design of the light control structure LS. The definition of the effective emitting angle θ of the present embodiment will be detailed in the following.

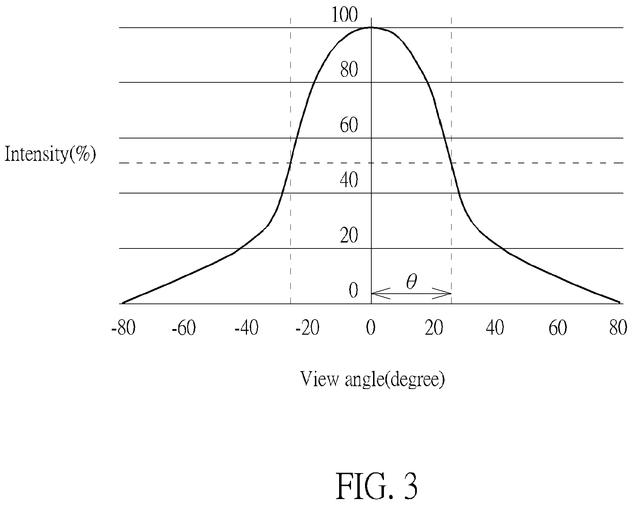

Referring to FIG. 3, FIG. 3 shows a schematic diagram of the light intensity of the display device according to the first embodiment of the present invention under different viewing angles. According to the present embodiment, the effective emitting angle θ of the light control structure LS may for example be defined as the view angle corresponding to half of the maximum brightness of the display device DD. Specifically, the brightness of the display device DD under different angles of view may be measured at first, and the view angle corresponding to half of the maximum brightness may thereby be found, which can be designed as the effective emitting angle θ of the light control structure LS. The brightness change of the display structure DP under different angles may for example be obtained by measuring at a measuring position on the light emitting surface of the test specimen through brightness measuring equipment (such as color analyzer CA-310 or display measuring system (DMS)). Specifically, after the measuring position on the light emitting surface of the test specimen is determined, the brightness under different tilt angles (for example, range from -90 degrees to +90 degrees) may respectively be measured in the same plane angle (for example, choose an angle from 0 degree to 360 degrees), thereby obtaining the brightness distribution under different tilt angles (that is, different angles of view). In an example, a position on the light emitting surface of the display device DD may be selected as the initial point of the measuring position, and the plane angle is chosen to be 0 degree, and then, the brightness may be measured under the tilt angle from -80 degrees to +80 degrees at intervals of 10 degrees (that is, the brightness may be measured under the tilt angle of -80 degrees, -70 degrees..., 0 degree..., +70 degrees and +80 degrees), but not limited thereto. As shown in FIG. 3, the display device DD may have the maximum brightness (100%) in the center view (that is, the view angle is 0 degree), and the effective emitting angle θ of the light control structure LS may be designed as the view angle corresponding to half of the maximum brightness (that is, 50%), such as 25 degrees, but not limited thereto. It should be noted that the method for designing the effective emitting angle θ mentioned above is exemplary, and the present disclosure is not limited thereto. In some embodiments, the effective emitting angle θ can be designed in any proper way according to the demands of the product.

Return to FIG. 1, according to the present embodiment, the effective emitting angle θ of the light control structure LS is less than or equal to the included angle between the line segment between the first reference point RP1 and the center CE of the display structure DP and the horizontal direction. As mentioned above, the distance dx1 exists between the first reference point RP1 and the display device DD in the horizontal direction, and the distance dz1 exists between the first reference point RP1 and the center CE of the display device DD in the vertical direction. Therefore, the included angle between the line segment between the first reference point RP1 and the center CE of the display structure DP and the horizontal direction may be arctan(dz1/dx1). In other words, the effective emitting angle θ of the present embodiment may satisfy the following formula (1):

$$\theta \leq \arctan(dz1/dx1) \qquad (1)$$

For example, FIG. 1 shows the condition that the effective emitting angle θ is equal to arctan(dz1/dx1), but the present embodiment is not limited thereto. In some embodiments, the effective emitting angle θ may be less than arctan(dz1/dx1). It should be noted that the unit of the arctan (dz1/dx1) in formula (1) may be radian (rad) or degree (deg) converted from radian. For example, $\pi/2$ radian is equal to 90 degrees, and $\pi/4$ radian is equal to 45 degrees. In addition, the unit of "θ" in formula (1) may be degree, wherein the relation between degree (deg) and radian (rad) is deg = rad* $(180/\pi)$. In the following formula, the units of "θ" or arctan may refer to the above-mentioned descriptions, and will not be redundantly described. According to the present embodiment, since the effective emitting angle θ may be less than or equal to the included angle between the line segment between the first reference point RP1 and the center CE of the display structure DP and the horizontal direction, the possibility that the light emitted by the display structure DP is reflected by the viewing region VR on the window WD and perceived by the user may be reduced. Specifically, the light with the emitting angle less than or equal to the effective emitting angle θ (or the light that can be perceived by the user) may be emitted to the first reference point RP1 out of the viewing region VR on the window WD or other positions further away from the viewing region VR, that is, the light may not emitted to the viewing region VR. In another aspect, the light emitted by the display structure DP with the emitting angle greater than the effective emitting angle θ may be reduced or eliminated through the light control structure LS, so as to reduce the possibility that the light with the emitting angle greater than the effective emitting angle θ is emitted to the viewing region VR. Since the viewing region VR is defined through the field of view FV of the user, the possibility that the field of view FV of the user (such as the driver, but not limited thereto) is affected by the light emitted by the display structure DP and reflected by the viewing region VR may be reduced by making the effective emitting angle θ of the light control structure LS have the above-mentioned design, thereby reducing the risk of driving.

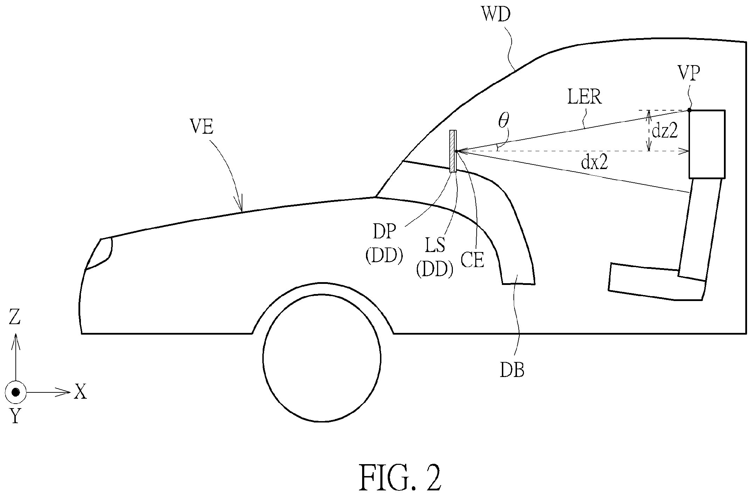

Referring to FIG. 2, FIG. 2 shows another schematic diagram of the display device in the vehicle according to the first embodiment of the present disclosure. As shown in FIG. 2, in the present embodiment, a distance dx2 may exist between the view point VP and the display device DD in the horizontal direction, and a distance dz2 may exist between the view point VP and the center CE of the display device DD in the vertical direction, wherein the view point VP may for example be set at the position where the top end of the seat of the user is located, but not limited thereto. According to the present embodiment, the effective emitting angle θ of the light control structure LS may be great than or equal to the included angle between the line segment between the view point VP and the center CE of the display structure DP and the horizontal direction, wherein the included angle between the line segment between the view point VP and the center CE of the display structure DP and the horizontal direction may be arctan(dz2/dx2). In other words, the effective emitting angle θ of the present embodiment may satisfy the following formula (2):

$$arctan(dz2/dx2)\leq\theta \quad (2)$$

For example, FIG. 2 shows the condition that the effective emitting angle θ is equal to arctan(dz2/dx2), but the present embodiment is not limited thereto. In some embodiments, the effective emitting angle θ may be greater than arctan(dz2/dx2). According to the present embodiment, since the effective emitting angle θ may be greater than or equal to the included angle between the line segment between the view point VP and the center CE of the display structure DP and the horizontal direction, the influence of the light control structure LS on the viewing experience of the user watching the display device DD may be reduced. Specifically, when the effective emitting angle θ is less than arctan(dz2/dx2), the light of the display device DD observed by the user at the view point VP may be affected by the light control structure LS, such that the intensity of the light is reduced or the light may become invisible, thereby affecting the viewing experience of the user. It should be noted that the relation between the effective emitting angle θ and the included angle between the line segment between the view point VP and the center CE of the display structure DP and the horizontal direction of the present embodiment is not limited to what is shown in the above-mentioned formula (2). In some embodiments, the effective emitting angle θ may be greater than or equal to 0.5 times of the included angle between the line segment between the view point VP and the center CE of the display structure DP and the horizontal direction, that is, the effective emitting angle θ may satisfy the following formula (3):

$$0.5*arctan(dz2/dx2)\leq\theta \quad (3)$$

Referring to the formula (1) and the formula (2) mentioned above, the effective emitting angle θ of the present embodiment may satisfy the following formula (4):

$$arctan(dz2/dx2)\leq\theta\leq arctan(dz1/dx1) \quad (4)$$

Specifically, by making the effective emitting angle θ located within the range shown in the formula (4), the possibility that the field of view FV of the user is affected by the light emitted by the display structure DP and reflected by the viewing region VR may be reduced while reducing the influence of the light control structure LS on the viewing experience of the user watching the display device DD. The value design of the effective emitting angle θ of the present embodiment may be applied to each of the embodiments and variant embodiments of the present disclosure, and will not be redundantly described in the following.

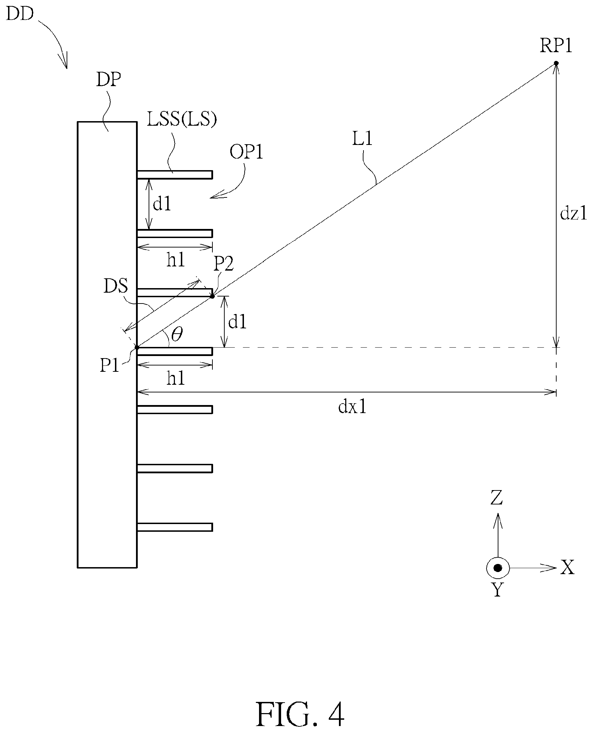

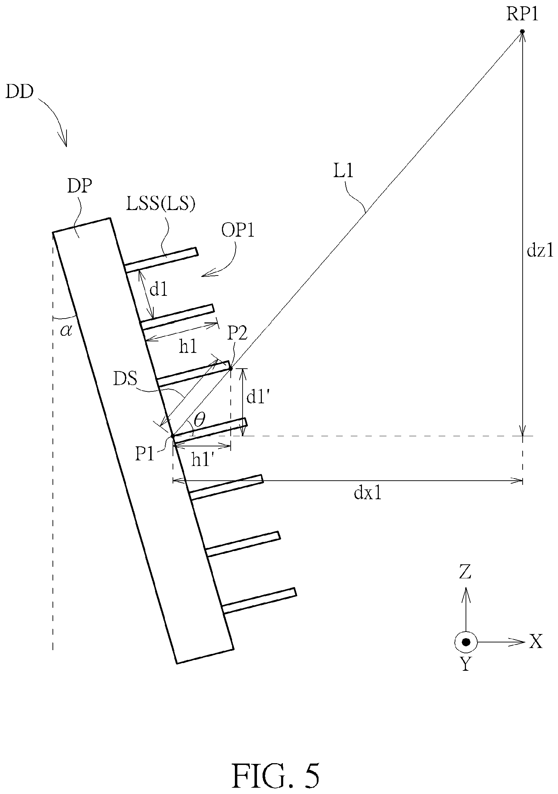

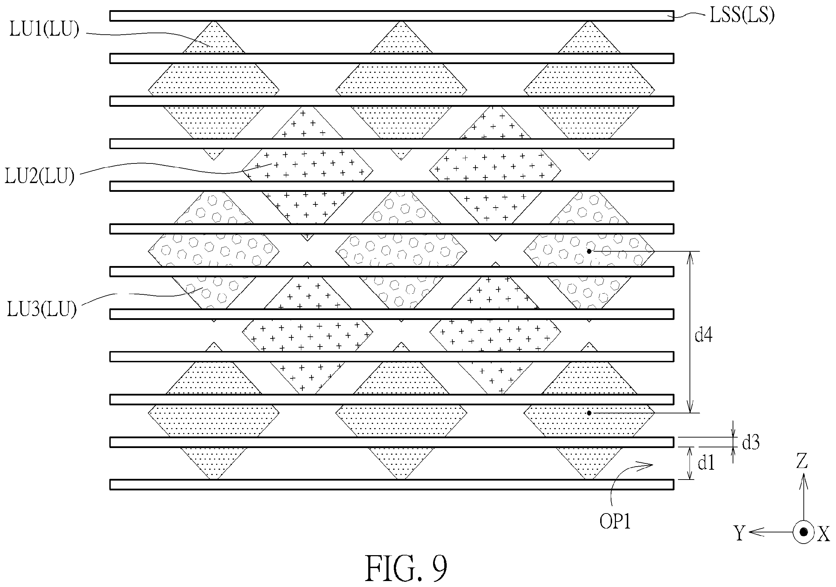

Referring to FIG. 4 and FIG. 5, FIG. 4 schematically illustrates a cross-sectional view of a light control structure according to the first embodiment of the present disclosure, and FIG. 5 schematically illustrates a cross-sectional view of a light control structure according to a variant embodiment of the first embodiment of the present disclosure. According to the present embodiment, the light control structure LS includes a plurality of light shielding structures LSS, wherein the light shielding structures LSS may be disposed on a side of the display structure DP facing the user, but not limited thereto. As shown in FIG. 4, the light shielding structures LSS of the present embodiment may be directly disposed on the display structure DP, for example, the light shielding structures LSS may be disposed on the insulating layer IL4 of the display structure DP (as shown in FIG. 7), but not limited thereto. In some embodiments, the light shielding structures LSS may be adhered to the display structure DP through an adhesive layer, thereby forming the display device DD. The light shielding structure LSS may include any suitable light absorbing material, but not limited thereto. In other words, the light can be blocked or absorbed by the light shielding structures LSS when it passes through the light shielding structures LSS. The light shielding structures LSS of the present embodiment may have a sheet structure and may for example extend on the display structure DP along a direction (for example, the direction ±Y, but not limited thereto) perpendicular to the horizontal direction (that is, the direction ±X) and the vertical direction (that is, the direction ±Z), but not limited thereto. In such condition, the light shielding structures LSS may be columnar in the cross-sectional view (for example, FIG. 4) of the display device DD along the horizontal direction, and the light shielding structures LSS may be strip-shaped in the top view (for example, FIG. 9) of the display device DD, but not limited thereto. As shown in FIG. 4, first openings OP1 may be included between adjacent two of the light shielding structures LSS, wherein the first openings OP1 may have a first width d1 in the vertical direction. In addition, the light shielding structures LSS may respectively have a first thickness h1 in the horizontal direction. In the present embodiment, different first openings OP1 may have the same first width d1, and different light shielding structures LSS may have the same first thickness h1, but not limited thereto.

According to the present embodiment, when the emitting angle of the light emitted from the display structure DP is excessive great, the light may pass through the light shielding structures LSS and be blocked or absorbed by the light shielding structures LSS, thereby achieving the effect of reducing light with excessive great emitting angle through the light control structure LS. In such condition, as shown in FIG. 4, the light L1 emitted from the bottom end point (such as the point P1) of a light shielding structure LSS and passes through the top end point (such as the point P2) of another light shielding structure LSS adjacent to the light shielding structure LSS may be the light emitted by the display structure DP with the maximum emitting angle that is not affected by the light control structure LS. In other words, the included angle between the light L1 and the horizontal direction may be defined as the effective emitting angle θ of the light control structure LS. Therefore, the effective emitting angle θ of the present embodiment may for example be determined through the component of the moving distance of the light L1 in the light shielding structures LSS in the horizontal direction and the component of the moving distance of the light L1 in the light shielding structures LSS in the vertical direction. Specifically, the moving distance of the light L1 in the light shielding structures LSS may be the linear distance between the point P1 and the point P2, that is, the distance DS, and the tangent of the effective emitting angle θ may be a ratio of the component of the distance DS in the vertical direction to the component of the distance DS in the horizontal direction. In the present embodiment, the component of the distance DS in the vertical direction may be the first width d1 of the first opening OP1, and the component of the distance DS in the horizontal direction may be the first thickness h1 of the light shielding structure LSS. Accordingly, the effective emitting angle θ of the present embodiment may satisfy the following formula (5):

$$tan(\theta) = d1/h1 \qquad (5)$$

In addition, as mentioned above, the effective emitting angle θ of the present embodiment may be less than or equal to the included angle between the line segment between the first reference point RP1 and the center CE of the display structure DP and the horizontal direction. Therefore, the ratio of the first width d1 to the first thickness h1 may satisfy the following formula (6):

$$d1/h1 \le dz1/dx1 \qquad (6)$$

For example, FIG. 4 shows the condition that the ratio of the first width d1 to the first thickness h1 is equal to the ratio of the distance dz1 to the distance dx1 (that is, the effective emitting angle θ is equal to the included angle between the line segment between the first reference point RP1 and the center CE of the display structure DP and the horizontal direction), but the present embodiment is not limited thereto. In some embodiments, the ratio of the first width d1 to the first thickness h1 may be less than the ratio of the distance dz1 to the distance dx1. According to the present embodiment, since the effective emitting angle θ may be determined through the first width d1 of the first openings OP1 between the light shielding structures LSS and the first thickness h1 of the light shielding structures LSS, the light control structures LS with different effective emitting angles θ may be formed by adjusting the pitch of the light shielding structures LSS or the thickness of the light shielding structures LSS.

In a variant embodiment, as shown in FIG. 5, a tilt angle α may be included between the display device DD disposed in the vehicle VE and the vertical direction. In other words, the normal direction of the surface of the display device DD may not be parallel to the moving direction (that is, the horizontal direction) of the vehicle VE. In such condition, the effective emitting angle θ of the light control structure LS may be determined through the component of the moving distance of the light L1 in the light shielding structures LSS in the horizontal direction and the component of the moving distance of the light L1 in the light shielding structures LSS in the vertical direction. Specifically, the moving distance of the light L1 in the light shielding structures LSS may be the distance DS, wherein the component of the distance DS in the horizontal direction may be the distance h1' and the component of the distance DS in the vertical direction may be the distance d1'. Therefore, the effective emitting angle θ of the light control structure LS of the present variant embodiment may satisfy the following formula (7):

$$tan(\theta) = d1'/h1' \qquad (7)$$

In addition, since the effective emitting angle θ is less than or equal to the included angle between the line segment between the first reference point RP1 and the center CE of the display structure DP and the horizontal direction, the ratio of the distance d1' to the distance h1' may be less than the ratio of the distance dz1 to the distance dx1. For example, FIG. 5 shows the condition that the ratio of the distance d1' to the distance h1' is equal to the ratio of the distance dz1 to the distance dx1, but the present variant embodiment is not limited thereto.

It should be noted that the structure of the light control structure LS of the present embodiment is not limited to what is shown in FIG. 4 and FIG. 5, and the light control structure LS may include any structure capable of reducing the light emitted by the display structure DP with a great emitting angle. In some embodiments, the light control structure LS may include electrically controlled birefringence (ECB) liquid crystal materials. In some embodiments, the light control structure LS may include twisted nematic (TN) liquid crystal materials. In some embodiments, the light control structure LS may include electrochromic (EC) materials, such as combination of electrochromic materials and liquid crystal materials. In some embodiments, the light control structure LS may include suspended particle device (SPD). In some embodiments, the light control structure LS may include electronic ink or other suitable dye, such as combination of dye and liquid crystal materials.

It should be noted that the structure of the display device of the present disclosure is not limited to the above-mentioned display device DD. Other embodiments of the present disclosure will be described in the following. In order to simplify the description, the same elements or layers in the following embodiments would be labeled with the same symbol, and the features thereof will not be redundantly described. The differences between the embodiments will be detailed in the following.

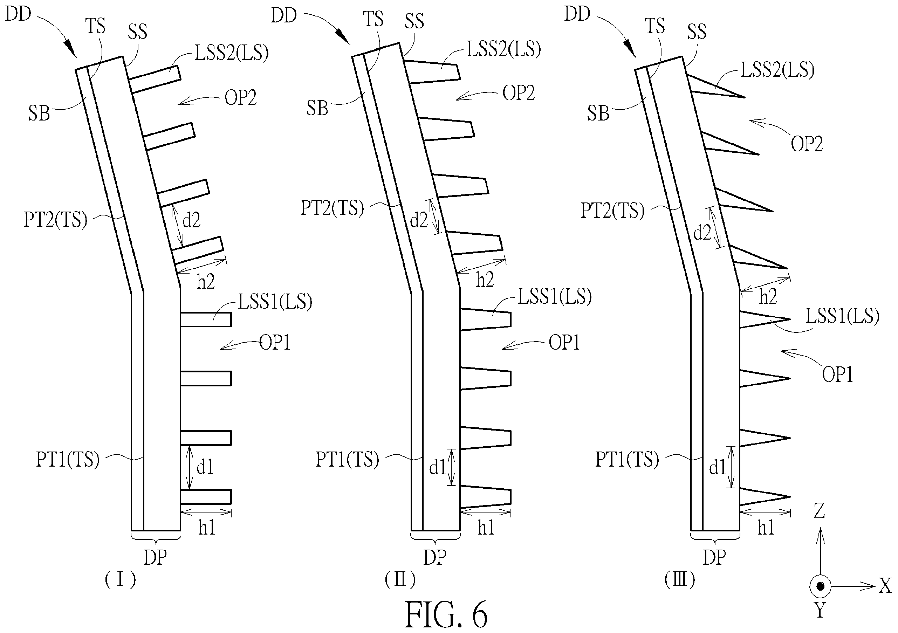

Referring to FIG. 6, FIG. 6 schematically illustrates a cross-sectional view of a display device according to a second embodiment of the present disclosure. According to the present embodiment, the display device DD may be the display device having multiple surfaces. For example, as shown in FIG. 6, the display device DD of the present embodiment includes two parts that are not parallel to each other. Accordingly, the top surface TS of the substrate SB includes a first part PT1 and a second part PT2, wherein the first part PT1 is not parallel to the second part PT2. The first part PT1 and the second part PT2 of the top surface TS respectively corresponds to different light shielding structures LSS. In detail, in the direction perpendicular to the first part PT1 of the top surface TS (that is, the direction X), the first part PT1 overlaps a portion of the light shielding structures LSS, that is, the light shielding structures LSS1; and in the direction perpendicular to the second part PT2 of the top surface TS, the second part PT2 overlaps a portion of the light shielding structures LSS, that is, the light shielding structures LSS2. The light shielding structures LSS1 may have a first thickness h1, first openings OP1 are included between adjacent two of the light shielding structures LSS1, wherein the first openings OP1 may have a first width d1; the light shielding structures LSS2 may have a second thickness h2, second openings OP2 are included between adjacent two of the light shielding structures LSS2, wherein the second openings OP2 may have a second width d2, but not limited thereto. "The second thickness h2 of the light shielding structure LSS2" described herein may be defined as the distance between the highest point and the lowest point of the light shielding structure LSS2 in a direction perpendicular to the second part PT2 in any cross-sectional view of the display device DD, and "the second width d2 of the second openings OP2" may be defined as the distance between the bottom end points of two adjacent light shielding structures LSS2 in a direction parallel to the second part PT2 in any cross-sectional view of the display device DD, but not limited thereto. The definitions of the first width d1 and the first thickness h1 may refer to the contents mentioned above, and will not be redundantly described. According to the present embodiment, a first ratio may be the first thickness h1 to the first width d1, and a second ratio may be the second thickness h2 to the second width d2, wherein the first ratio and the second ratio may be different, but not limited thereto. In other words, in the present embodiment, the designs of the ratios of the thicknesses to the widths of the openings of the light shielding structures LSS1 and the light shielding structures LSS2 respectively corresponding to the first part PT1 and the second part PT2 which are not parallel to each other may be different. It should be noted that the display device DD shown in FIG. 6 is exemplary, and the present disclosure is not limited thereto. In some embodiments, the display device DD may include more than two parts that are not parallel to each other, and the designs of the ratios of the thicknesses to the widths of the openings of the light shielding structures LSS respectively corresponding to these parts may be different.

In addition, the light shielding structures LSS of the present embodiment may include any suitable shape or be disposed in any suitable way. FIG. 6 shows three examples of the shape and disposition of the light shielding structures LSS, but the present disclosure is not limited thereto. In example (I), the shapes of the light shielding structures LSS1 and the light shielding structures LSS2 in the cross-sectional view parallel to the horizontal direction may be rectangular, and the light shielding structures LSS1 and the light shielding structures LSS2 may respectively be disposed perpendicular to the first part PT1 and the second part PT2. In example (II), the shapes of the light shielding structures LSS1 and the light shielding structures LSS2 in the cross-sectional view parallel to the horizontal direction may be a trapezoid, wherein the light shielding structures LSS1 may be disposed perpendicular to the first part PT1, and the light shielding structures LSS2 may be disposed parallel to the light shielding structures LSS1. In example (III), the shapes of the light shielding structures LSS1 and the light shielding structures LSS2 in the cross-sectional view parallel to the horizontal direction may be conical, wherein the light shielding structures LSS1 may be disposed perpendicular to the first part PT1, and the light shielding structures LSS2 may be disposed in the way of facing the light shielding structures LSS1. The shape and disposition of the light shielding structures of the present embodiment may be applied to each of the embodiments and variant embodiments of the present disclosure.

Referring to FIG. 7, FIG. 7 schematically illustrates a cross-sectional view of a display device according to a third embodiment of the present disclosure. According to the present embodiment, the light control structure LS may further include an anti-reflection layer ARL in addition to the light shielding structures LSS, wherein the anti-reflection layer ARL is disposed on the light shielding structures LSS and covers the light shielding structures LSS. For example, the anti-reflection layer ARL may be disposed on the light shielding structures LSS along the side surfaces and the top surfaces of the light shielding structures LSS, thereby forming a concave-convex surface, but not limited thereto. In addition, in the present embodiment, the light control structure LS may further include a protection layer PL disposed on the anti-reflection layer ARL and the light shielding structures LSS, wherein the protection layer PL may have a flat surface, but not limited thereto. The protection layer PL may provide protection to the anti-reflection layer ARL and the light shielding structures LSS. The protection layer PL may include any suitable insulating material. The feature that the light control structure LS includes the protection layer PL of the present embodiment may be applied to each of the embodiments and variant embodiments of the present disclosure.

According to the present embodiment, the anti-reflection layer ARL may include any suitable material with a refractive index between the refractive index of the protection layer PL and the refractive index of the light shielding structures LSS, but not limited thereto. In some embodiments, the anti-reflection layer ARL may include a multi-layer structure, wherein the multi-layer structure may be formed by stacking a plurality of layers with different refractive indices. In some embodiments, the anti-reflection layer ARL may include micro structures. In some embodiments, the anti-reflection layer ARL may include any suitable material with low reflectivity. Since the light control structure LS of the present embodiment may include the anti-reflection layer ARL, the possibility of reflection of the light when the light passes through the light control structure LS may be reduced. The structure of the display structure DP of the present embodiment may refer to the contents mentioned above, and will not be redundantly described here.

In addition, as shown in FIG. 7, the display device DD may include a display area DA and a non-display area NDA. The display area DA may be the area of the display device DD including the light emitting units LU and capable of displaying images. In the present embodiment, the display area DA may be defined through the light emitting units LU. For example, the display area DA may be defined as the area enclosed by the outer edges of the outermost light emitting units LU among the plurality of light emitting units LU, and the area other than the display area DA may be defined as the non-display area NDA, but not limited thereto. The non-display area NDA may for example be used for disposing peripheral elements and/or peripheral circuits, but not limited thereto. For example, the display device DD may further include an external electronic element CB disposed in the non-display area NDA, wherein the external electronic element CB may be electrically connected to the light emitting units LU through the signal lines (not shown) in the display structure DP, thereby controlling light emission of the light emitting units LU. The external electronic element CB may for example include a printed circuit board (PCB), a flexible printed circuit board (FPCB), other suitable electronic elements or combinations of the above-mentioned elements, but not limited thereto.

According to the present embodiment, the display structure DP may include at least one groove GR, wherein the grooves GR may be disposed in the non-display area NDA. Specifically, the grooves GR may be formed by removing at least a portion of the insulating layers (including the insulating layer IL1, the insulating layer IL2, the insulating layer IL3 and the insulating layer IL4, but not limited thereto) of the display structure DP. Air may be filled into the grooves GR, but the present embodiment is not limited thereto. In some embodiments, organic insulating materials may be filled into the grooves GR. By disposing grooves GR in the non-display area NDA, the moisture and/or oxygen out of the display structure DP may be blocked, thereby reducing the possibility of damage to the elements (such as the light emitting units LU) in the display structure DP due to being affected by moisture and/or oxygen. In addition, the depths of different grooves GR may be different in the present embodiment. For example, as shown in FIG. 7, the groove GR1 may be formed by removing a portion of the insulating layer IL2, a portion of the insulating layer IL3 and a portion of the insulating layer IL4, and the groove GR2 may be formed by removing a portion of the insulating layer IL1, a portion of the insulating layer IL2, a portion of the insulating layer IL3 and a portion of the insulating layer IL4. Therefore, the depths of the groove GR1 and the groove GR2 may be different. For example, the groove GR1 may have a depth DH1, and the groove GR2 may have a depth DH2, wherein the depth DH1 and the depth DH2 may be different, but not limited thereto. The feature that the display structure DP includes the grooves GR of the present embodiment may be applied to each of the embodiments and variant embodiments of the present disclosure.

Referring to FIG. 8, FIG. 8 schematically illustrates a cross-sectional view of a display device according to a variant embodiment of the third embodiment of the present disclosure. According to the present embodiment, the display device DD may further include a polarizer POL, wherein the polarizer POL may overlap the light control structure LS in a direction perpendicular to the surface of the substrate SB (that is, the direction X). For example, as shown in FIG. 8, the polarizer POL may be disposed on the light control structure LS and overlapped with the light control structure LS, but not limited thereto. In some embodiments, the polarizer POL may be disposed between the light control structure LS and the display structure DP. In some embodiments, the polarizer POL may be disposed in the display structure DP and located on the light emitting units LU. The polarizer POL of the present embodiment may include any suitable polarizing element capable of converting the light emitted from the light emitting units LU into a p-polarized light. In other words, the light may be converted into a p-polarized light after it passes through the polarizer POL, wherein the light may be a linearly polarized light or a circularly polarized light, but not limited thereto. In order to test whether the light converted by the polarizer POL is a p-polarized light, a known polarizer may be disposed on the display device DD to test the polarizing direction of the light passing through the polarizer POL. According to the present embodiment, since the display device DD may include the polarizer POL capable of converting light into p-polarized light, wherein the p-polarized light has a lower reflectivity at a great emitting angle than the s-polarized light, the possibility that the light passing through the polarizer POL is reflected by the window WD (or the viewing region VR) to the eyes of the user may be reduced, thereby reducing interference of light on the field of view FV of the user. The features of other elements and/or layers of the structure shown in FIG. 8 may refer to the contents mentioned above, and will not be redundantly described.

Referring to FIG. 9, FIG. 9 schematically illustrates a partial enlarged top view of a display device according to a fourth embodiment of the present disclosure. As mentioned above, the first openings OP1 between two adjacent light shielding structures LSS may have the first width d1. In addition, as shown in FIG. 9, one of the light shielding structures LSS may have a width d3. According to the present embodiment, the width d3 of the light shielding structures LSS may be lower than the first width d1 of the first openings OP1 (that is, d3<d1), but not limited thereto. In other words, the ratio of the first width d1 of the first openings OP1 to the width d3 of the light shielding structures LSS may be greater than 1 (that is, d1/d3>1). In some embodiments, the ratio of the first width d1 to the width d3 may be between 1 and 100 (that is, 1<d1/d3<100). In some embodiments, the ratio of the first width d1 to the width d3 may be between 1 and 50 (that is, 1<d1/d3<50). In some embodiments, the ratio of the first width d1 to the width d3 may be between 1 and 10 (that is, 1<d1/d3<10). The different ranges of the ratio mentioned above may for example correspond to different manufacturing methods of the light shielding structures LSS respectively. The manufacturing method of the light shielding structures LSS may for example include nanoimprinting lithography, thin film processes, mold-material stretching or other suitable processes. Since the width d3 of the light shielding structures LSS may be lower than the first width d1 of the first openings OP1, the proportion of the light emitting region of the light emitting units LU covered by the light shielding structures LSS may be reduced. Specifically, since the ratio of the first width d1 to the width d3 may be greater than 1, the loss rate of the light emitting region of the light emitting units LU may be less than 50%, but not limited thereto. In other words, through the above-mentioned design, the influence of the light shielding structures LSS on the display effect of the display device DD may be reduced, thereby improving the display quality of the display device DD. "The light emitting region of the light emitting units LU" mentioned above may be the region where the light emitting units LU actually emit light. For example, in the light emitting unit shown in FIG. 7, the light emitting region may be defined as the overlapping region of the first electrode E1, the second electrode E2 and the light emitting layer LEL; and in the light emitting unit shown in FIG. 8, the light emitting region may be defined as the region formed of the projection of the top surface of the light emitting unit LU, but not limited thereto.

In addition, as shown in FIG. 9, a distance d4 may exist between two adjacent light emitting units LU in the vertical direction. The distance d4 described herein may be defined as the distance between the centers of the two adjacent light emitting units LU, but not limited thereto. It should be noted that the light emitting unit LU may include irregular shapes in some embodiments, and the center of the light emitting unit LU may be defined as the center of the minimum rectangle enclosed by the outer edges of the light emitting unit LU. According to the present embodiment, the distance d4 between two adjacent light emitting units LU may be greater than the first width d1 of the first openings OP1 (that is, d4>d1), but not limited thereto. In other words, the ratio of the first width d1 to the distance d4 may be less than 1 (that is, d1/d4<1). In some embodiments, the ratio of the first width d1 to the distance d4 may be between 0.01 and 1 (that is, 0.01<d1/d4<1). In some embodiments, the ratio of the first width d1 to the distance d4 may be between 0.1 and 1 (that is, 0.1<d1/d4<1). In some embodiments, the ratio of the first width d1 to the distance d4 may be between 0.5 and 1 (that is, 0.5<d1/d4<1). The different ranges of the ratio mentioned above may for example correspond to different manufacturing methods of the light shielding structures LSS and the light emitting units LU respectively. The manufacturing method of the light shielding structures LSS may refer to the above-mentioned contents, and will not be redundantly described. The manufacturing method of the light emitting units LU may for example include fine metal mask (FMM), ink-jet printing (IJP) or other suitable processes. In the present embodiment, since the distance d4 between two adjacent light emitting units LU may be greater than the first width d1 of the first openings OP1, which is the pitch between two adjacent light shielding structures LSS, the areas of the portions of different light emitting units LU shielded by the light shielding structures LSS may be similar. Therefore, when the display structure DP includes light emitting units LU emitting light of different colors, the possibility of occurrence of color variation may be reduced. Specifically, as shown in FIG. 9, the light emitting units LU of the present embodiment may for example include first light emitting units LU1, second light emitting units LU2 and third light emitting units LU3, wherein the first light emitting units LU1, the second light emitting units LU2 and the third light emitting units LU3 may respectively emit red light, green light and blue light, which can be mixed into white light, but not limited thereto. Since the distance d4 between two adjacent light emitting units LU may be greater than the first width d1 of the first openings OP1, the areas of the portions of the light emitting units LU of different colors shielded by the light shielding structures LSS may be similar, and so as to reduce the possibility of color variation due to the light shielding structures LSS shielding a specific color with an excessive area. The relation between the width of the light shielding structures LSS, the first width d1 of the first openings OP1 and the distance d4 between two adjacent light emitting units LU in the present embodiment may be applied to each of the embodiments and variant embodiments of the present disclosure.

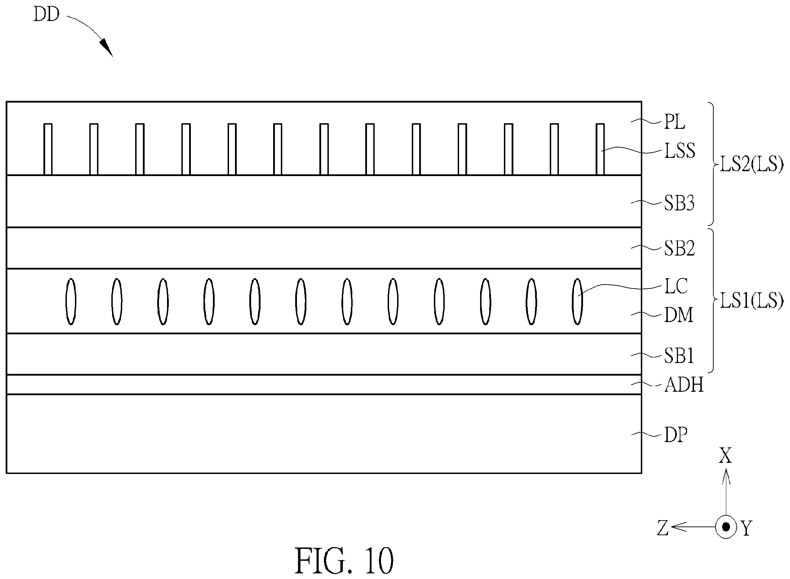

Referring to FIG. 10, FIG. 10 schematically illustrates a cross-sectional view of a display device according to a fifth embodiment of the present disclosure. According to the present embodiment, the light control structure LS may include a multi-layer structure, or in other words, the light control structure LS may be formed by stacking more than one of the light control structures LS mentioned above. For example, as shown in FIG. 10, the light control structure LS may be formed by stacking a first light control structure LS1 and a second light control structure LS2, but not limited thereto. The second light control structure LS2 may for example be adhered to the first light control structure LS1 through an adhesive layer (not shown), but not limited thereto. The first light control structure LS1 may include a first substrate SB1, a second substrate SB2, and a display medium layer DM disposed between the first substrate SB1 and the second substrate SB2, wherein the display medium layer DM may include liquid crystal, such as the electrically controlled birefringence liquid crystal mentioned above, but not limited thereto. The second light control structure LS2 may include a third substrate SB3, the light shielding structures LSS disposed on the third substrate SB3 and the protection layer PL covering the light shielding structures LSS, but not limited thereto. It should be noted that the structure of the display device DD of the present embodiment is not limited to what is shown in FIG. 10. As mentioned above, the light control structure LS may include electrically controlled birefringence liquid crystal materials, twisted nematic liquid crystal materials, electrochromic materials, suspended particle device, dye or the light shielding structures LSS. In some embodiments, the first light control structure LS1 and the second light control structure LS2 may respectively include any one or combinations of the above-mentioned materials. In some embodiments, the light control structure LS of the display device DD may be formed by stacking more than two of the light control structures LS.

In summary, a display device for a vehicle with a window is provided by the present disclosure. The display device includes a display structure and a light control structure disposed on the display structure. When the light passes through the light control structure, the light with a greater emitting angle may be eliminated or reduced by the light control structure, thereby reducing the possibility that the light is reflected by the window to the eyes of the user. Therefore, the interference of the light of the display device on the field of view of the user may be reduced, thereby reducing the risk of driving.

**Claims**

1. A display device (DD) for a vehicle (VE) with a windshield (WD), comprising:

    a substrate (SB);
    a light control structure (LS) disposed on the substrate (SB), wherein the light control structure (LS) comprises a plurality of light shielding structures (LSS1, LSS2), wherein a first opening (OP1) is between two adjacent ones of the plurality of light shielding structures (LSS1), and a second opening (OP2) is between other two adjacent ones of the plurality of light shielding structures (LSS2); and
    a plurality of light emitting units (LU) disposed between the substrate (SB) and the light control structure (LS) and emitting a light passing through the light control structure (LS);
    wherein in a cross-sectional view, a viewing region (VR) is defined on the windshield (WD), a first reference point (RP1) at the windshield (WD) is out of the viewing region (VR) and corresponding to an upper side (US) of the viewing region (VR), a distance dx1 exists between the first reference point (RP1) and the display device (DD) in a horizontal direction, a distance dz1 exists between the first reference point (RP1) and a center (CE) of the display device (DD) in a vertical direction, the light control structure (LS) has an effective emitting angle θ, and the effective emitting angle θ satisfies the following equation:

$$\theta \leq \arctan(dz1/dx1);$$

    wherein the display device (DD) is **characterized in that** the substrate (SB) has a top surface (TS), a first part (PT1) of the top surface (TS) is overlapped with the two adjacent ones of the plurality of light shielding structures (LSS1), a second part (PT2) of the top surface (TS) is overlapped with the other two adjacent ones of the plurality of light shielding structures (LSS2), and the first part (PT1) is not parallel to the second part (PT2).

2. The display device (DD) of claim 1, **characterized in that** the viewing region (VR) is defined by a field of view (FV), and an angle ($\varphi$) of the field of view (FV) is in a range from 10 to 100 degrees.

3. The display device (DD) of claim 2, **characterized in that** the angle ($\varphi$) of the field of view (FV) is in a range from 20 to 60 degrees.

4. The display device (DD) of claim 2 or claim 3, **characterized in that** the angle ($\varphi$) of the field of view (FV) is 60 degrees.

5. The display device (DD) of any of claims 1 to 4, **characterized in that** a view point (VP) is in the vehicle (VE), a distance dx2 exists between the display device (DD) and the view point (VP) in the horizontal direction, a distance dz2 exists between the view point (VP) and the center (CE) of the display device (DD) in the vertical direction, and the effective emitting angle $\theta$ satisfies the following equation:

$$\arctan(dz2/dx2) \leq \theta.$$

6. The display device (DD) of any of claims 1 to 4, **characterized in that** a view point (VP) is in the vehicle (VE), a distance dx2 exists between the display device (DD) and the view point (VP) in the horizontal direction, a distance dz2 exists between the view point (VP) and the center (CE) of the display device (DD) in the vertical direction, and the effective emitting angle $\theta$ satisfies the following equation:

$$0.5*\arctan(dz2/dx2) \leq \theta.$$

7. The display device (DD) of any of claims 1 to 6, **characterized by** further comprising a polarizer (POL) overlapping the light control structure (LS), wherein the polarizer (POL) converts the light to a p-polarized light.

8. The display device (DD) of any of claims 1 to 7, **characterized in that** the light control structure (LS) is a multi-layer structure.

9. The display device (DD) of any of claims 1 to 8, **characterized in that** at least one of the two adjacent ones of the plurality of light shielding structures (LSS1) has a first thickness h1 in the horizontal direction, the first opening (OP1) has a first width d1 in the vertical direction, and the effective emitting angle $\theta$ satisfies the following equation:

$$\tan(\theta) = d1/h1.$$

10. The display device (DD) of claim 9, **characterized in that** the at least one of the two adjacent ones of the plurality of light shielding structures (LSS) has a width (d3) in the vertical direction, and the width (d3) is less than the first width d1 of the first opening (OP1).

11. The display device (DD) of claim 9, **characterized in that** a distance (d4) exists between two adjacent ones of the plurality of light emitting units (LU), and the distance (d4) is greater than the first width d1 of the first opening (OP1).

12. The display device (DD) of claim 9, **characterized in that** the second opening (OP2) has a second width d2, at least one of the other two adjacent ones of the plurality of light shielding structures (LSS2) has a second thickness h2, a ratio of the first thickness h1 to the first width d1 is defined as a first ratio, a ratio of the second thickness h2 to the second width d2 is defined as a second ratio, and the first ratio is different from the second ratio.

**Patentansprüche**

1. Anzeigevorrichtung (DD) für ein Fahrzeug (VE) mit einer Windschutzscheibe (WD), umfassend:

ein Substrat (SB);
eine Lichtsteuerungsstruktur (LS), die auf dem Substrat (SB) angeordnet ist, worin die Lichtsteuerungsstruktur (LS) mehrere Lichtabschirmungsstrukturen (LSS1, LSS2) umfasst, worin sich eine erste Öffnung (OP1) zwischen zwei benachbarten der mehreren Lichtabschirmungsstrukturen (LSS1) befindet und eine zweite Öffnung (OP2) zwischen zwei weiteren benachbarten der mehreren Lichtabschirmungsstrukturen (LSS2) angeordnet ist; und mehrere Licht emittierende Einheiten (LU), die zwischen dem Substrat (SB) und der Lichtsteuerungsstruktur (LS) angeordnet sind und Licht emittieren, das durch die Lichtsteuerungsstruktur (LS) hindurchtritt;
worin in einer Querschnittsansicht ein Betrachtungsbereich (VR) auf der Windschutzscheibe (WD) definiert ist, ein erster Referenzpunkt (RP1) an der Windschutzscheibe (WD) außerhalb des Betrachtungsbereichs (VR) liegt und einer Oberseite (US) des Betrachtungsbereichs (VR) entspricht, ein Abstand dx1 zwischen dem ersten Referenzpunkt (RP1) und der Anzeigevorrichtung (DD) in horizontaler Richtung besteht, ein Abstand dz1 zwischen dem ersten Referenzpunkt (RP1) und einem Mittelpunkt (CE) der Anzeigevorrichtung (DD) in vertikaler Richtung besteht, die Lichtsteuerungsstruktur (LS) einen effektiven Emissionswinkel θ aufweist und der effektive Emissionswinkel θ die folgende Gleichung erfüllt:

$$\theta \leq \arctan(dz1/dx1);$$

worin die Anzeigevorrichtung (DD) **dadurch gekennzeichnet ist, dass** das Substrat (SB) eine obere Oberfläche (TS) aufweist, ein erster Teil (PT1) der oberen Oberfläche (TS) mit den beiden benachbarten der mehreren Lichtabschirmungsstrukturen (LSS1) überlappt, ein zweiter Teil (PT2) der oberen Oberfläche (TS) mit den beiden anderen benachbarten der mehreren Lichtabschirmungsstrukturen (LSS2) überlappt und der erste Teil (PT1) nicht parallel zum zweiten Teil (PT2) ist.

2. Anzeigevorrichtung (DD) nach Anspruch 1, **dadurch gekennzeichnet, dass** der Betrachtungsbereich (VR) durch ein Sichtfeld (FV) definiert ist und ein Winkel (φ) des Sichtfelds (FV) in einem Bereich von 10 bis 100 Grad liegt.

3. Anzeigevorrichtung (DD) nach Anspruch 2, **dadurch gekennzeichnet, dass** der Winkel (φ) des Sichtfeldes (FV) in einem Bereich von 20 bis 60 Grad liegt.

4. Anzeigevorrichtung (DD) nach Anspruch 2 oder Anspruch 3, **dadurch gekennzeichnet, dass** der Winkel (φ) des Sichtfeldes (FV) 60 Grad beträgt.

5. Anzeigevorrichtung (DD) nach einem der Ansprüche 1 bis 4, **dadurch gekennzeichnet, dass** sich ein Blickpunkt (VP) im Fahrzeug (VE) befindet, zwischen der Anzeigevorrichtung (DD) und dem Blickpunkt (VP) in horizontaler Richtung ein Abstand dx2 besteht, zwischen dem Blickpunkt (VP) und dem Zentrum (CE) der Anzeigevorrichtung (DD) in vertikaler Richtung ein Abstand dz2 besteht und der effektive Abstrahlwinkel θ die folgende Gleichung erfüllt:

$$\arctan(dz2/dx2) \leq \theta.$$

6. Anzeigevorrichtung (DD) nach einem der Ansprüche 1 bis 4, **dadurch gekennzeichnet, dass** sich ein Blickpunkt (VP) im Fahrzeug (VE) befindet, zwischen der Anzeigevorrichtung (DD) und dem Blickpunkt (VP) in horizontaler Richtung ein Abstand dx2 besteht, zwischen dem Blickpunkt (VP) und dem Zentrum (CE) der Anzeigevorrichtung (DD) in vertikaler Richtung ein Abstand dz2 besteht und der effektive Abstrahlwinkel θ die folgende Gleichung erfüllt:

$$0.5*\arctan(dz2/dx2) \leq \theta.$$

7. Anzeigevorrichtung (DD) nach einem der Ansprüche 1 bis 6, **dadurch gekennzeichnet, dass** diese ferner einen Polarisator (POL) umfasst, der die Lichtsteuerungsstruktur (LS) überlappt, worin der Polarisator (POL) das Licht in p-polarisiertes Licht umwandelt.

8. Anzeigevorrichtung (DD) nach einem der Ansprüche 1 bis 7, **dadurch gekennzeichnet, dass** die Lichtsteuerungsstruktur (LS) eine Mehrschichtstruktur ist.

9. Anzeigevorrichtung (DD) nach einem der Ansprüche 1 bis 8, **dadurch gekennzeichnet, dass** mindestens eine der beiden benachbarten der mehreren Lichtabschirmungsstrukturen (LSS1) eine erste Dicke h1 in horizontaler Richtung aufweist, die erste Öffnung (OP1) eine erste Breite d1 in vertikaler Richtung aufweist und der effektive Abstrahlwinkel θ die folgende Gleichung erfüllt:

$$\tan(\theta)=d1/h1.$$

10. Anzeigevorrichtung (DD) nach Anspruch 9, **dadurch gekennzeichnet, dass** mindestens eine der beiden benachbarten der mehreren Lichtabschirmungsstrukturen (LSS) eine Breite (d3) in vertikaler Richtung aufweist und die Breite (d3) kleiner ist als die erste Breite d1 der ersten Öffnung (OP1).

11. Anzeigevorrichtung (DD) nach Anspruch 9, **dadurch gekennzeichnet, dass** zwischen zwei benachbarten der mehreren Licht emittierenden Einheiten (LU) ein Abstand (d4) besteht und der Abstand (d4) größer ist als die erste Breite d1 der ersten Öffnung (OP1).

12. Anzeigevorrichtung (DD) nach Anspruch 9, **dadurch gekennzeichnet, dass** die zweite Öffnung (OP2) eine zweite Breite d2 aufweist, mindestens eine der beiden anderen benachbarten der mehreren Lichtabschirmungsstrukturen (LSS2) eine zweite Dicke h2 aufweist, ein Verhältnis der ersten Dicke h1 zur ersten Breite d1 als erstes Verhältnis definiert ist, ein Verhältnis der zweiten Dicke h2 zur zweiten Breite d2 als zweites Verhältnis definiert ist und das erste Verhältnis sich vom zweiten Verhältnis unterscheidet.

**Revendications**

1. Dispositif d'affichage (DD) pour un véhicule (VE) équipé d'un pare-brise (WD), comprenant:

un substrat (SB);

une structure de contrôle de la lumière (LS) disposée sur le substrat (SB), dans lequel la structure de contrôle de la lumière (LS) comprend une pluralité de structures de protection contre la lumière (LSS1, LSS2), dans lequel une première ouverture (OP1) se trouve entre deux structures adjacentes parmi la pluralité de structures de protection contre la lumière (LSS1), et une deuxième ouverture (OP2) entre deux autres structures adjacentes parmi la pluralité de structures de protection contre la lumière (LSS2); et

une pluralité d'unités d'émission de lumière (LU) disposées entre le substrat (SB) et la structure de contrôle de la lumière (LS) et émettant une lumière qui traverse la structure de contrôle de la lumière (LS);

dans laquelle, dans une vue en coupe transversale, une région de visualisation (VR) est définie sur le pare-brise (WD), un premier point de référence (RP1) au niveau du pare-brise (WD) est situé en dehors de la région de visualisation (VR) et correspond à un côté supérieur (US) de la région de visualisation (VR), une distance dx1 existe entre le premier point de référence (RP1) et le dispositif d'affichage (DD) dans une direction horizontale, une distance dz1 existe entre le premier point de référence (RP1) et un centre (CE) du dispositif d'affichage (DD) dans une direction verticale, la structure de contrôle de la lumière (LS) a un angle d'émission effectif θ, et l'angle d'émission effectif θ satisfait l'équation suivante:

$$\theta \leq \arctan(dz1/dx1);$$

dans lequel le dispositif d'affichage (DD) est **caractérisé en ce que** le substrat (SB) comporte une surface supérieure (TS), une première partie (PT1) de la surface supérieure (TS) est recouverte par les deux structures adjacentes parmi la pluralité de structures de protection contre la lumière (LSS1), une deuxième partie (PT2) de la surface supérieure (TS) est recouverte par les deux autres structures adjacentes parmi la pluralité de structures de protection contre la lumière (LSS2), et la première partie (PT1) n'est pas parallèle à la deuxième partie (PT2).

2. Dispositif d'affichage (DD) selon la revendication 1, **caractérisé en ce que** la zone de visualisation (VR) est définie par un champ de vision (FV), et un angle (φ) du champ de vision (FV) est compris entre 10 et 100 degrés.

3. Dispositif d'affichage (DD) selon la revendication 2, **caractérisé en ce que** l'angle (φ) du champ de vision (FV) est compris entre 20 et 60 degrés.

4. Dispositif d'affichage (DD) selon la revendication 2 ou la revendication 3, **caractérisé en ce que** l'angle (φ) du champ de vision (FV) est de 60 degrés.

5. Dispositif d'affichage (DD) selon l'une quelconque des revendications 1 à 4, **caractérisé en ce qu'**un point de vue (VP) se trouve dans le véhicule (VE), une distance dx2 existe entre le dispositif d'affichage (DD) et le point de vue (VP) dans la direction horizontale, une distance dz2 existe entre le point de vue (VP) et le centre (CE) du dispositif d'affichage (DD) dans la direction verticale, et l'angle d'émission effectif θ satisfait l'équation suivante:

$$\arctan(dz2/dx2) \leq \theta.$$

6. Dispositif d'affichage (DD) selon l'une quelconque des revendications 1 à 4, **caractérisé en ce qu'**un point de vue (VP) se trouve dans le véhicule (VE), une distance dx2 existe entre le dispositif d'affichage (DD) et le point de vue (VP) dans la direction horizontale, une distance dz2 existe entre le point de vue (VP) et le centre (CE) du dispositif d'affichage (DD) dans la direction verticale, et l'angle d'émission effectif θ satisfait l'équation suivante:

$$0.5*\arctan(dz2/dx2) \leq \theta.$$

7. Dispositif d'affichage (DD) selon l'une quelconque des revendications 1 à 6, **caractérisé en ce qu'**il comprend en outre un polariseur (POL) recouvrant la structure de contrôle de la lumière (LS), dans lequel le polariseur (POL) convertit la lumière en une lumière polarisée p.

8. Dispositif d'affichage (DD) selon l'une quelconque des revendications 1 à 7, **caractérisé en ce que** la structure de contrôle de la lumière (LS) est une structure multicouche.

9. Dispositif d'affichage (DD) selon l'une quelconque des revendications 1 à 8, **caractérisé en ce qu'**au moins l'une des deux structures adjacentes parmi la pluralité de structures de protection contre la lumière (LSS1) a une première épaisseur h1 dans la direction horizontale, la première ouverture (OP1) a une première largeur d1 dans la direction verticale, et l'angle d'émission effectif θ satisfait l'équation suivante:

$$\tan(\theta) = d1/h1.$$

**10.** Dispositif d'affichage (DD) selon la revendication 9, **caractérisé en ce que** l'au moins une des deux structures adjacentes parmi la pluralité de structures de protection contre la lumière (LSS) a une largeur (d3) dans la direction verticale, et la largeur (d3) est inférieure à la première largeur d1 de la première ouverture (OP1).

**11.** Dispositif d'affichage (DD) selon la revendication 9, **caractérisé en ce qu'**une distance (d4) existe entre deux unités d'émission de lumière (LU) adjacentes parmi la pluralité d'unités d'émission de lumière (LU), et la distance (d4) est supérieure à la première largeur d1 de la première ouverture (OP1).

**12.** Dispositif d'affichage (DD) selon la revendication 9, **caractérisé en ce que** la deuxième ouverture (OP2) a une deuxième largeur d2, au moins l'une des deux autres structures de protection contre la lumière (LSS2) adjacentes parmi la pluralité de structures de protection contre la lumière (LSS2) a une deuxième épaisseur h2, un rapport entre la première épaisseur h1 et la première largeur d1 est défini comme un premier rapport, un rapport entre la deuxième épaisseur h2 et la deuxième largeur d2 est défini comme un deuxième rapport, et le premier rapport est différent du deuxième rapport.

FIG. 1

EP 4 296 756 B1

FIG. 2

FIG. 3

FIG. 4

FIG. 5

FIG. 6

FIG. 7

EP 4 296 756 B1

FIG. 8

FIG. 9

FIG. 10

EP 4 296 756 B1

**EP 4 296 756 B1**

REFERENCES CITED IN THE DESCRIPTION

**Patent documents cited in the description**

- EP 3264485 A2
- US 2021193971 A1
- US 2022113550 A1
- US 2019384057 A1